# EUROPEAN PATENT APPLICATION

(11) **EP 4 184 288 A1**
(43) Date of publication of application: **24.05.2023**
(21) Application number: 21209331.4
(22) Date of filing: 19.11.2021
(51) Int. Cl.: G06F 1/30, G06F 1/18, H02H 3/05, H02H 3/20

(54) **M.2 EXPANSION CARD WITH OVERVOLTAGE PROTECTION CIRCUITS**

(71) Applicant: Kontron Europe GmbH, 85737 Ismaning (DE)
(72) Inventor: Bogomolni, Igor, 10783 Berlin (DE); Roider, Michael, 93455 Traitsching (DE)
(74) Representative: Gunzelmann, Rainer

(57) **Abstract**

Disclosed is an M.2 expansion card comprising at least one microcontroller, a first overvoltage protection circuit having a first input and a first output and configured to provide a first output voltage at the first output based on a first voltage at the first input such that the first output voltage is below a first predefined voltage threshold, and a second overvoltage protection circuit having a second input and a second output, wherein the second overvoltage protection circuit is configured to provide a second output voltage at the second output based on the first output voltage at the second input such that the second output voltage is below a second predefined voltage threshold, wherein the second output is electrically connected to the at least one microcontroller to provide the at least one microcontroller with a supply voltage. Also disclosed is a system comprising a circuit board and the expansion card.

## Description

### Technical Field

The present disclosure generally relates to an M.2 expansion card comprising a first and a second overvoltage protection circuit. The present disclosure also provides for a system comprising a circuit board and the M.2 expansion card.

### Background

An expansion card may be inserted into an electrical connector, expansion slot or socket on a motherboard, backplane, circuit board or riser card to add functionality to the computer system comprising the motherboard, backplane, circuit board or riser card. Expansion cards may also be referred to as expansion boards, adapter cards or accessory cards. In safety-critical applications such as avionics, self-driving cars and several industrial applications, it must be ensured that expansion cards work reliably.

In current solutions, a supply voltage provided to an expansion card may be controlled by a power controller external to the expansion card to fall within a predefined operating range of the expansion card. Although this may protect the expansion card from being damaged or working improperly, the control of the supply voltage provided to the expansion card may in some cases be prone to errors. For instance, off-the shelf computer systems intended for home use by private persons usually comprise low-cost components including low-cost power controller(s). Even in industrial-grade computer systems, power controller(s) configured to control a supply voltage provided to an expansion card may fail from time to time. That is, computer systems may not reliably control the supply voltage provided to an expansion card installable in the respective computer system.

Some expansion cards comprise an analog voltage transformer configured to step down (e.g., to one fourth) a supply voltage provided to the respective expansion card. Although this may ensure that a supply voltage (e.g., 3 V) used by active electric components of the expansion card is lower than the supply voltage provided to the respective expansion card (e.g., 12 V), this solution still has some drawbacks. For instance, such voltage transformers may not protect components of the expansion card from high supply voltages (e.g., 10 V) that may destroy the (e.g., active) components of the expansion card, in case of supply overvoltages (e.g., 40 V) provided to the expansion card. Supply overvoltages may occur if the control of the supply voltage provided to the expansion card is flawed (e.g., due to a short circuit or another malfunction of the power controller external to the expansion card). Additionally, such analog voltage transformers typically comprise at least one capacitor and at least one inductive coil, each having rather large dimensions (e.g., above 1.5mm in all spatial directions).

### Summary

There is a need for an expansion card that solves one or more of the aforementioned or other problems.

According to a first aspect, an M.2 expansion card is provided. The card comprises at least one microcontroller. The card further comprises a first overvoltage protection circuit having a first input and a first output. The first overvoltage protection circuit is configured to provide a first output voltage at the first output on a first voltage at the first input such that the first output voltage is below a first predefined voltage threshold. The card further comprises a second overvoltage protection circuit having a second input and a second output. The second input is electrically connected to the first output. The second overvoltage protection circuit is configured to provide a second output voltage at the second output based on the first output voltage at the second input such that the second output voltage is below a second predefined voltage threshold. The second output is electrically connected to the at least one microcontroller to provide the at least one microcontroller with a supply voltage.

M.2 may also be referred to as Next Generation Form Factor, NGFF. The M.2 specification is a specification for internally mounted expansion cards and associated connectors. The expansion card may be referred to as "M.2 expansion card", as it complies with the (e.g., mechanical and/or electrical) requirements defined in the "PCI Express M.2 Specification" as for example provided by PCI-SIG^{®}. The M.2 specification may correspond to the "PCI Express M.2 Specification", Revision 4.0, Version 1.0, 5 November 2020, provided by PCI-SIG^{®}. The M.2 specification may correspond to an older version of this "PCI Express M.2 Specification".

The first overvoltage protection circuit may be configured to prevent the first output voltage from exceeding the first predefined voltage threshold. The first overvoltage protection circuit may be configured to limit the first output voltage. By limiting the first output voltage, the first overvoltage protection circuit may ensure that the first output voltage does not (e.g., correspond to and/or) exceed the first predefined voltage threshold. In case the first voltage is below the first predefined voltage threshold, the first overvoltage protection circuit may be configured to set the first output voltage to the first input voltage.

The second overvoltage protection circuit may be configured to prevent the second output voltage from exceeding the second predefined voltage threshold. The first overvoltage protection circuit may be configured to limit the second output voltage. By limiting the second output voltage, the second overvoltage protection circuit may ensure that the second output voltage does not (e.g., correspond to and/or) exceed the second predefined voltage threshold. In case the first output voltage is below the second predefined voltage threshold, the second overvoltage protection circuit may be configured to set the second output voltage to the first output voltage.

The first overvoltage protection circuit may be coupled in series with the second overvoltage protection circuit. The at least one microcontroller may be coupled in series with the second overvoltage protection circuit (and, e.g., the first overvoltage protection circuit). The at least one microcontroller may be arranged to receive the second output voltage as its supply voltage. The at least one microcontroller may comprise a plurality of microcontrollers coupled in parallel. Each of the plurality of microcontrollers may be arranged to receive the second output voltage as its supply voltage.

The second input may be directly connected to the first output. The second input may be connected to the first input such that a voltage at the second input corresponds to the first output voltage at the first output.

The first voltage may be a supply voltage provided to the card. The first voltage may be (e.g., temporarily) larger than one or both of the first predefined voltage threshold and the second predefined voltage threshold. The second predefined threshold voltage may be a value that corresponds to a (e.g., allowed) maximum (e.g., a highest tolerated) supply voltage of the at least one microcontroller. The first predefined voltage threshold may correspond to the second predefined voltage threshold.

The first overvoltage protection circuit may be structurally identical to the second overvoltage protection circuit. A circuit layout of the first overvoltage protection may correspond to a circuit layout of the second overvoltage protection circuit.

The first overvoltage protection circuit may consist of a same number of components as the second overvoltage protection circuit. The first overvoltage protection circuit and the second overvoltage protection circuit may consist of similar electric components. The similar electric components may be taken from same batches. Alternatively or additionally, the similar electric components may be similar in component type (e.g., transistors, resistors, capacitors, etc.) an/or similar in their electrical properties (e.g., resistance, capacity, operating range, voltage behavior etc.).

The card may comprise an edge connector. The edge connector may comprise a plurality of fingers. The fingers may also be referred to as pins. Each finger may correspond to an electrode contact or electrode pad. Each finger may be a gold-plated electric contact. The card may comprise a circuit board, for example a printed circuit board. The plurality of fingers may be formed on (e.g., one or both surfaces of) the circuit board. The first input may be directly connected to one or more of the plurality of fingers (e.g., without any electric components in a current path between the first input and the one or more of the plurality of fingers). The first voltage may be applied at the one or more of the plurality of fingers. The at least one microcontroller may be (e.g., indirectly) connected to the one or more of the plurality of fingers (e.g., only) via the first overvoltage protection circuit and the second overvoltage protection circuit.

The first overvoltage protection circuit may comprise at least one active electric component (e.g., relying on a source of energy to operate). The first overvoltage protection circuit may comprises a first transistor having a first gate. The first overvoltage protection circuit may comprise a first overvoltage supply protection controller, OSPC. The first OSPC may be configured to set the first output voltage to the first input voltage by turning on the first gate of the first transistor if (e.g., as long as) the first voltage is below the first predefined voltage threshold. The first OSPC may be configured to turn off the first gate of the first transistor if the first voltage reaches or exceeds the first predefined voltage threshold. The first OSPC may be configured to turn off the first gate of the first transistor by discharging the first gate with a current sink (e.g., implemented in or provided by the first OSPC).

The second overvoltage protection circuit may comprise at least one active electric component (e.g., relying on a source of energy to operate). The second overvoltage protection circuit may comprise a second transistor having a second gate. The second overvoltage protection circuit may comprise a second overvoltage supply protection controller, OSPC. The second OSPC may be configured to set the second output voltage to the second input voltage by turning on the second gate of the second transistor if (e.g., as long as) at least one of the second input voltage and the first output voltage is below the second predefined voltage threshold. The second OSPC may be configured to turn off the second gate of the second transistor if the first output voltage reaches or exceeds the second predefined voltage threshold. The second OSPC may be configured to turn off the second gate of the second transistor by discharging the second gate with a current sink (e.g., implemented in or provided by the second OSPC).

The first transistor may be an N-type transistor, for example an N-channel Metal Oxide Semiconductor Field-Effect Transistor, MOSFET. The first transistor may comprise a drain electrode and a source electrode. The drain electrode of the first transistor may be directly connected to the first input (e.g., without any electric components in a current path between the drain electrode of the first transistor and the first input) or may correspond to the first input. The source electrode of the first transistor may be directly connected to the first output (e.g., without any electric components in a current path between the source electrode of the first transistor and the first output) or may correspond to the first output.

The second transistor may be an N-type transistor, for example an N-channel Metal Oxide Semiconductor Field-Effect Transistor, MOSFET. The second transistor may comprise a drain electrode and a source electrode. The drain electrode of the second transistor may be directly connected to the second input (e.g., without any electric components in a current path between the drain electrode of the second transistor and the second input) or may correspond to the second input. The drain electrode of the second transistor may be directly connected to the first output input (e.g., without any electric components in a current path between the drain electrode of the second transistor and the first output). The source electrode of the second transistor may be directly connected to the second output (e.g., without any electric components in a current path between the source electrode of the second transistor and the second output) or may correspond to the second output.

The card may comprise one or more capacitors. At least one of the first overvoltage protection circuit and the second overvoltage protection circuit may comprise one or more capacitors. A capacitor (e.g., of the one or more capacitors) arranged on the card and having, among all capacitors (e.g., the one or more capacitors) arranged on the card, a largest capacitance, may have a capacitance equal to or below 100 µF, for example a capacitance equal to or below 60µF, such as a capacitance equal to or below 56.4µF (e.g., equal to or below 47µF). All of the one or more capacitors (e.g., of the card or of the at least one of the first overvoltage protection circuit and the second overvoltage protection circuit or of the card) may be bypass or decoupling capacitors. None of the capacitors arranged on the card (e.g., the one or more capacitors) may be a buffer capacitor.

The card may be configured such that the at least one microcontroller is provided with at least one monitoring voltage, in addition to (e.g., separate from) the supply voltage. The at least one monitoring voltage may indicate whether the first overvoltage protection circuit and/or the second overvoltage protection circuit is currently providing an output voltage that is lower than the voltage at the circuit's input and, optionally, to what extent (e.g., by which value or percentage). The at least one monitoring voltage may be chosen from (i) a first monitoring voltage representative of or corresponding to the first voltage and (ii) a second monitoring voltage representative of or corresponding to the first output voltage. The card may be configured such that the at least one monitoring voltage is provided to one or more pins comprised in the at least one microcontroller. The first monitoring voltage may be linearly dependent on the first voltage. The second monitoring voltage may be linearly dependent on the first output voltage. The card may comprise a first voltage divider configured to divide the first voltage. An output of the first voltage divider may correspond to the first monitoring voltage. The card may comprise a second voltage divider configured to divide the first output voltage. An output of the second voltage divider may correspond to the second monitoring voltage. The one or more pins may be directly connected to the output of the first and/or second voltage divider. A first pin of the at least one microcontroller may be directly connected to the output of the first voltage divider. A second pin of the at least one microcontroller may be directly connected to the output of the second voltage divider.

The at least one microcontroller may be configured to digitize the at least one monitoring voltage. The at least one microcontroller may comprise an internal analog-to-digital converter configured to convert the at least one monitoring voltage into a digital signal or value. Alternatively or additionally, the at least one microcontroller may be configured to digitize the supply voltage (e.g., provided to and/or used by the at least one microcontroller). The at least one microcontroller may comprise an internal analog-to-digital converter configured to convert the supply voltage into a digital signal or value. The at least one microcontroller may be configured to perform a predefined action (e.g., output a status signal or an error signal) based on and/or indicating the digitized at least one monitoring voltage and/or the digitized supply voltage.

The card may be configured such that the at least one microcontroller is the only active electric component of the card that uses the second output voltage or a voltage derived from the second output voltage as its supply voltage. The card may be configured such that all active components of the card except the at least one microcontroller are provided with the first voltage as their supply voltage.

The card may further comprise a Peripheral Component Interconnect Express, PCIe, bridge. The PCIe bridge may be arranged to receive the first voltage as its supply voltage. The PCIe bridge maybe (e.g., electrically and/or communicatively) connected to the at least one microcontroller. The PCIe bridge may be directly connected to one or more of the plurality of fingers. The at least one microcontroller may (e.g., only) be (e.g., indirectly) connected to one or more of the plurality of fingers via the first overvoltage protection circuit and the second overvoltage protection circuit or via the PCIe bridge.

The card may comprise no (e.g., electrical) components having a thickness of more than 1.5mm. The card may not comprise a capacitor having a thickness of more than 1.5mm. The thickness may correspond to a thickness of the component when mounted to a circuit board (e.g., the circuit board of the card). The thickness may be measured between a surface of the circuit board and a most distant surface of the component mounted on the circuit board.

The card may not comprise an electric component (e.g., a capacitor or a coil) having a (e.g., circular) cylindrical outer surface. The card may not comprise an electric component having an (e.g., cylindrical) outer surface extending more than 1.5mm in an axial direction. The card may only (e.g., exclusively) comprise surface-mounted electric components.

The card may comply with a form factor of the M.2 specification. The card may fulfil at least one of the following properties:
(a) the card has a width equal to or below 22 mm (e.g., a width of 12, 16 or 22 mm);
(b) the card has a length equal to or below 42 mm (e.g., a length of 16, 26, 30, 38 or 42 mm);
(c) a highest point of the card lies 1.5 mm or less (e.g., 1.5 mm or less, 1.35 mm or less, 1.2 mm or less or 0.7 mm or less) above a surface of a (e.g., the) circuit board of the card.

The card may have a width of 22 mm and a length of 42 mm. The card may have a thickness that complies with the D3 label or the D2 label of the M.2 specification. A highest point of the card may lie 1.5 mm or less (e.g., 1.35 mm or less) above an upper surface of the circuit board of the card. A lowest point of the card may lie 1.35 mm or less below a lower surface of the circuit board of the card.

According to a second aspect, a system is provided. The system comprises the card according to the first aspect. The system further comprises a circuit board having a socket configured to couple to the card. The socket may be configured to couple to the edge connector of the card. The card may be inserted in the slot.

### Brief Description of the Drawings

Further details, advantages and aspects of the present disclosure will become apparent from the following embodiments taken in conjunction with the drawings, wherein:
- Fig. 1: shows a first embodiment of a card in accordance with the present disclosure;
- Fig. 2: shows a circuit diagram of a card in accordance with the present disclosure;
- Fig. 3: shows a circuit diagram of two overvoltage protection circuits in accordance with the present disclosure;
- Fig. 4: shows a circuit diagram of a first portion of a microcontroller in accordance with the present disclosure;
- Fig. 5: shows a circuit diagram of a second portion of a microcontroller in accordance with the present disclosure;
- Fig. 6: shows a schematic illustration of an upper surface of a card in accordance with the present disclosure;
- Fig. 7: shows a schematic illustration of a lower surface of a card in accordance with the present disclosure; and
- Fig. 8: shows a schematic illustration of a system in accordance with the present disclosure.

### Detailed Description

In the following description, exemplary embodiments of an expansion card and a system will be explained with reference to the drawings. The same reference numerals will be used to denote the same or similar structural features.

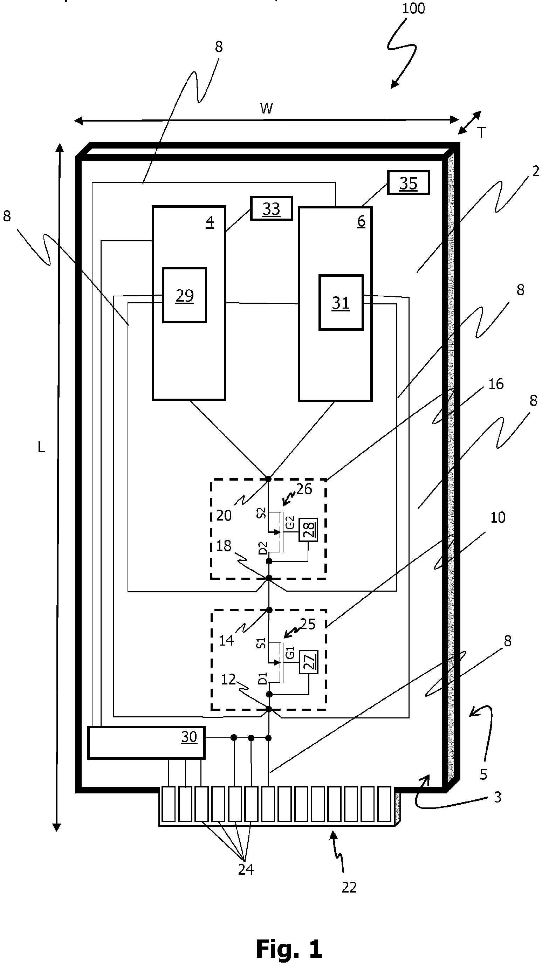

Fig. 1 shows a first embodiment of a card 100 in accordance with the present disclosure. The card 100 complies with the "PCI Express M.2 Specification" provided by PCI-SIG^{®} (e.g. Revision 4.0, Version 1.0 of 5 November 2002). The card may be configured to be mounted in a computing system to upgrade the computing system. Thus, the card 100 may be referred to as an M.2 card or an M.2 expansion card.

The card 100 may comprise a circuit board 2 such as a printed circuit board. In one particular example, the card 100 has a width W of 22mm and a length L of 42 mm, and a thickness T that complies with the D3 label or the D2 label of the M.2 specification. A highest point of the card 100 may lie 1.5 mm or less (e.g., 1.35 mm or less) above an upper surface 3 of the circuit board 2 of the card. A lowest point of the card 100 may lie 1.35 mm or less below a lower surface 5 of the circuit board 2 of the card 100. The card may comprise no (e.g., electrical) components having a thickness of more than 1.5mm.

The card 100 further comprises at least one microcontroller. In the embodiment of Fig. 1, the at least one microcontroller corresponds to two microcontrollers 4 and 6. Each microcontroller may comprise a plurality of connection pins (not shown in Fig. 1) connected with a conductive trace 8 arranged on the circuit board 2. The traces 8 are not considered to correspond to "components" as disclosed herein. The "components" may refer to electric components mounted on or mountable to the circuit board 2 (e.g., parts that are not integral with the circuit board 2).

The card 100 further comprises a first overvoltage protection circuit 10 having a first input 12 and a first output 14. The first overvoltage protection circuit 10 is configured to provide a first output voltage at the first output 14. To this end, the first overvoltage protection circuit 10 may use the first voltage at the first input 12. The first overvoltage protection circuit is configured to provide the first output voltage such that it is below a first predefined voltage threshold. The first overvoltage protection circuit 10 may be configured to provide the first voltage as the first output voltage, if the first voltage is below the first predefined voltage threshold. The first overvoltage protection circuit 10 may be configured to provide, as the first output voltage, a predefined voltage (e.g., a voltage of 0 V) that is lower than the first predefined voltage threshold, if the first voltage is equal to or higher than the first predefined voltage threshold.

The card 100 further comprises a second overvoltage protection circuit 16 having a second input 18 and a second output 20. The second input 18 is electrically connected to the first output 14, e.g., via one of the conductive traces 8. The second overvoltage protection circuit 16 is configured to provide a second output voltage at the second output 20 based on the first output voltage at the second input 18 such that the second output voltage is below a second predefined voltage threshold. The second overvoltage protection circuit 16 may be configured to provide the first output voltage as the second output voltage, if the first output voltage is below (e.g., lower than) the second predefined voltage threshold. The second overvoltage protection circuit 16 may be configured to provide, as the second output voltage, a predefined voltage (e.g., a voltage of 0 V) that is lower than the second predefined voltage threshold, if the first output voltage is equal to or higher than the second predefined voltage threshold.

This configuration may ensure that the at least one microcontroller 2, 4 is only provided with a supply voltage that is below a lower one of the first predefined voltage threshold and the second predefined voltage threshold. At least one of these thresholds my correspond to a maximum supply voltage usable by the at least one microcontroller 2, 4. This may prevent the at least one microcontroller 2, 4 from being damaged due to a supply overvoltage.

The first and/or second predefined voltage threshold may lie between 0 V to 10 V, for example between 0.5 V to 6 V, exemplarily between 1.5 and 5.5 V. The first and/or second predefined voltage threshold may lie between 3.5V and 3.74V and may for example correspond to 3.6V or 3.61V. This may enable use of a microcontroller that requires a low supply voltage (e.g., of 3.3 V ±10%). Such microcontrollers typically have a low size, enabling a compact construction of the card 100.

The first predefined voltage threshold may correspond to the second predefined voltage threshold. In this case, one may say that the two overvoltage protection circuits 10, 16 are provided for sake of redundancy. In other words, the second overvoltage protection circuit 16 may be provided with an input voltage at the second input that corresponds to or exceeds the second predefined voltage threshold (e.g., only) if the first overvoltage protection circuit 10 has a defect resulting in the first output voltage corresponding to or exceeding the first predefined voltage threshold. In case the second overvoltage protection circuit 16 has such a defect, the first overvoltage protection circuit 10 may still ensure that the at least one microcontroller is only provided with a supply voltage lower than the first predefined voltage threshold. Put differently, the combination of the first and second overvoltage protection circuits 10, 16 may improve reliability of the microcontroller's supply voltage being lower than a critical threshold (e.g., the first and the second predefined voltage threshold).

The first overvoltage protection circuit 10 may be structurally identical to the second overvoltage protection circuit 16 (e.g., have a same electric circuit layout). This may enable an easy arrangement of all components of the card 100 on the circuit board 2 and minimize circuit design effort.

The first overvoltage protection circuit 10 and the second overvoltage protection circuit 16 may consist of similar electric components. The similar electric components may further be taken from the same batch(es). This may minimize circuit design effort, reduce costs and ensure a similar risk of failure for each of the overvoltage protection circuits 10, 16.

As can be seen in Fig. 1, the card 100 may comprise an edge connector 22 having a plurality of fingers 24. The edge connector 22 may also be referred to as an edge card connector. The fingers may be gold-plated contacts formed on the circuit board 2. The first input 12 may be directly connected to one or more of the plurality of fingers 24, for example via one or more of the traces 8. The expression that two components are "directly connected" may refer to an electrical connection between the two components without any additional electric components (e.g., resistors, transistors, diodes, inductors) in a current path between the two components. The one or more fingers connected to the first input 12 may be configured to be provided with a card supply voltage. The card supply voltage may be provided by an external power controller or power converter (not shown).

In an ideal scenario, the card supply voltage is identical to the optimal supply voltage of the at least one microcontroller 2, 4. In this case, the card supply voltage would not need to be changed by one of the overvoltage protection circuits 10, 16. In other words, the card supply voltage may be (e.g., used as the supply voltage) provided to the at least one microcontroller 2, 4. Nevertheless, in case of a faulty external power controller or power converter, the card supply voltage may exceed the maximum supply voltage that can be provided to the at least one microcontroller 2, 4 without causing disruption of the microcontroller's operation or without causing damage to the microcontroller 2, 4. As the card 100 comprises the first and second overvoltage protection circuits 10, 16, the at least one microcontroller 2, 4 is protected from such a supply overvoltage.

The first overvoltage protection circuit 10 may comprise a first transistor 25 having a first gate G1. The first overvoltage protection circuit 10 may further comprise a first overvoltage supply protection controller, OSPC, 27 configured to turn off the first gate G1 of the first transistor 25 if the first voltage reaches or exceeds the first predefined voltage threshold. The first transistor 25 comprises a drain electrode D1 and a source electrode S1. The drain electrode D1 may be (e.g., directly) connected to the first input 12 and the source electrode S1 may be (e.g., directly) connected to the first output 14.

The second overvoltage protection circuit 16 may comprise a second transistor 26 having a second gate G2, a source electrode S2 and a drain electrode D2. The second overvoltage protection circuit 16 may further comprise a second OSPC 28 configured to turn off the second gate G2 of the second transistor 26 if the first output voltage (or, e.g., the voltage at the second input 18) reaches or exceeds the second predefined voltage threshold. The drain electrode D2 may be (e.g., directly) connected to the second input 18 and/or the first output 14. The source electrode S2 may be (e.g., directly) connected to the second output 20 and/or the at least one microcontroller 2, 4.

The first and/or the second OSPC 27, 28 may be configured to withstand (e.g., card supply or input) voltages of up to and including 20V, 30V, 40V, 50V or 100V (or, for example, a value between two of these numbers), for example at the input of the first or second overvoltage protection circuit 10, 16. The first and/or the second OSPC 27, 28 may be configured to use less than or equal to 200µA, 150µA, 100µA or 70µA in operation (e.g., while turning off the gate of the respective transistor 25, 26). The first OSPC 27 may be configured to control only the gate voltage of the first transistor 25. The second OSPC 28 may be configured to control only the gate voltage of the second transistor 26. The first overvoltage protection circuit 10 may comprise only one transistor (e.g., the first transistor 25) controlled by the OSPC 27. The second overvoltage protection circuit 16 may comprise only one transistor (e.g., the second transistor 26) controlled by the OSPC 28.

This configuration may enable a compact building size and an efficient operation while ensuring that the at least on microcontroller 2, 4 is protected from a supply overvoltage.

A capacitor of the card 100 having, among all capacitors of the card 100, a largest capacitance, may have a capacitance equal to or below 100 µF, for example equal to or below 47µF ±10%. This differs from known solutions using buffer capacitors having larger capacitances. Such buffer capacitors typically have a large geometrical size (e.g., equal to or larger than 20mm³). A capacitor of the card 100 having, among all capacitors of the card 100, a largest volume, may have a volume of equal to or less than 15mm³, for example equal to or less than 10mm³ (e.g., equal to or less than 5mm³).

An inductor of the card 100 having, among all inductors of the card 100, a largest inductance, may have an inductance equal to or below 1µH, for example equal to or below 1µH±10%. This differs from known solutions using voltage-transforming inductors having larger inductances. Such voltage-transforming inductors typically have a large geometrical size (e.g., equal to or larger than 20mm³). An inductor of the card 100 having, among all inductors of the card 100, a largest volume, may have a volume of equal to or less than 20mm³, for example equal to or less than 15mm³ (e.g., equal to or less than 10mm³).

The solution described herein may thus enable a compact configuration of the card 100.

The card 100 may not comprise an (e.g., analog and/or static) voltage transformer. No inductor or coil may be arranged or electrically connected between the first input and the second output. No inductor or coil may be arranged or electrically connected between the second output and a pin of the at least one microprocessor configured to be provided with the supply voltage. Such transformers and coils typically have large geometrical sizes, so the above features enable a compact configuration of the card 100.

The card 100 may be configured such that the at least one microcontroller 2, 4 is provided with at least one monitoring voltage. The at least one monitoring voltage may comprise one or more of a first monitoring voltage representative of the first voltage and a second monitoring voltage representative of the first output voltage. The at least one monitoring voltage may comprise a third monitoring voltage representative of the second output voltage and/or the supply voltage of the at least one microcontroller 2, 4. The monitoring voltage may be directly provided to the at least one microcontroller 2, 4 via one or more of the traces 8. That is, the at least one microcontroller 2, 4 may be directly connected to a portion of the first overvoltage protection circuit and/or a portion of the second overvoltage protection circuit to obtain the at least one monitoring voltage. In the example illustrated in Fig. 1, the microcontrollers 4 and 6 are each provided with the first voltage and the first output voltage as monitoring voltages.

This may enable a compact size of the card 100 while providing the at least one microcontroller 2, 4 with useful information on the status of the overvoltage protection circuits 10, 16.

The at least one microcontroller 2, 4 may be configured to digitize the at least one monitoring voltage. Alternatively or additionally, the at least one microcontroller is configured to digitize the (e.g., its) supply voltage. The card 100 may be configured such that the at least one monitoring voltage and/or the supply voltage is provided to one of the pins of the at least one microcontroller 2, 4 that is used by the at least one microcontroller 2, 4 to digitize an input signal. The at least one microcontroller 2, 4 may comprise an analog-to-digital converters 29, 31 and be configured to digitize the at least one monitoring voltage with the analog-to-digital converter 29, 31.

This may enable the at least one processor 2, 4 to perform one or more predefined operations based on the digitized voltage(s). For instance, if the first predefined voltage threshold corresponds to the second predefined voltage threshold, the first monitoring voltage is equal to the second monitoring voltage, and the third monitoring voltage is lower than the second predefined voltage threshold, it may be assumed that the first overvoltage protection circuit 10 is currently not changing the first output voltage relative to the first input voltage, but the second overvoltage protection circuit 16 changes the second output voltage relative to the first output voltage. These conditions may indicate that the first overvoltage protection circuit 10 has a malfunction (e.g., the first transistor 25 is shorted), while the second overvoltage protection circuit 16 has not. The at least one microcontroller 2, 4 may then output a signal to the PCIe bridge 30 representing this indication and/or trigger activation of at least one (e.g., error indicating) light emitting element 33, 35 arranged on the card 100.

The card 100 may be configured such that the at least one microcontroller 2, 4 is the only active electric component of the card 100 that uses the second output voltage or a voltage derived from the second output voltage as its supply voltage. All active electric components of the card 100 except for the at least one microcontroller 2, 4 may use the first voltage as their supply voltage. In one example, a (e.g., single) transistor or diode (e.g., provided as a separate component or device) is not considered to be an active component.

This may ensure that the at least one microcontroller 2, 4 is only provided with a supply voltage below the first and/or second predefined voltage threshold, while allowing the other components of the card 100 to use other (e.g., higher) supply voltages. One may say that the at least one microcontroller 2, 4 is arranged on a "safe portion" of the card 100 protected from supply overvoltage, whereas the other components are arranged on an "unsafe portion" not protected from supply overvoltage.

The card 100 may further comprise a Peripheral Component Interconnect Express, PCIe, bridge 30 arranged to receive the first voltage as its supply voltage. The PCIe bridge 30 may be communicatively connected to the at least one processor 2, 4, for example via one or more of the traces 8. The two processors 2, 4 may be connected to the PCIe bridge 30 in parallel. This may ensure that the PCIe bridge can still communicate with one of the processors 2, 4 if the other one of the processors 2, 4 is defect. In case both overvoltage protection circuits 10, 16 have a malfunction such that the at least one processor 2, 4 is provided with an insufficient supply voltage, an error-state or an OFF-state of the at least one processor 2, 4 may be detected via the PCIe bridge 30 that uses a separate supply voltage (e.g., the card supply voltage).

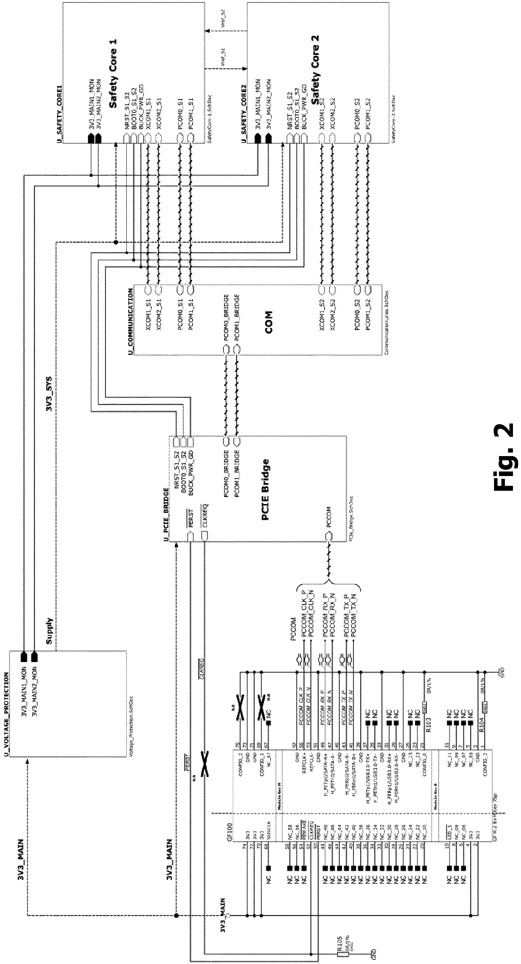

Fig. 2 shows a circuit diagram of a card in accordance with the present disclosure. The card may correspond to the card 100 described with reference to Fig. 1. The block "U_VOLTAGE_PROTECTION" may correspond to a combination of the first overvoltage protection circuit 10 and the second overvoltage protection circuit 16. The voltage "3V3_MAIN" may correspond to the card supply voltage and the first voltage described herein. The block "Safety Core 1" may comprise the microprocessor 4 and the block "Safety Core 2" may comprise the microprocessor 6. "Safety Core 2" may be configured identical as "Safety Core 1" (e.g., consist of similar electric components and have a similar circuit layout). The block "PCIE Bridge" may correspond to the PCIe bridge 30. The voltage "3V3_MAIN1_MON" may correspond to the first monitoring voltage. The voltage "3V3_MAIN2_MON" may correspond to the second monitoring voltage. The voltage "3V3_SYS" may correspond to the voltage at the second output and/or the supply voltage of the at least one microprocessor 2, 4.

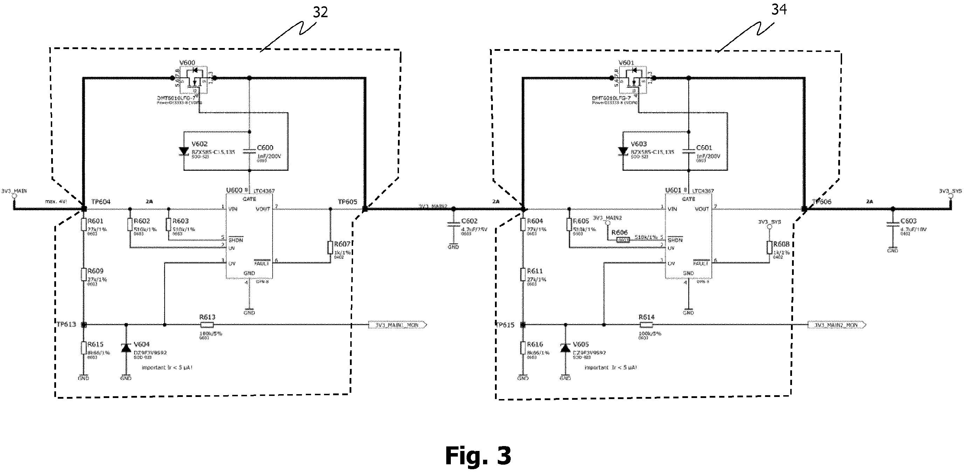

Fig. 3 shows a circuit diagram of two overvoltage protection circuits 32, 34 in accordance with the present disclosure. The overvoltage protection circuits 32, 34 may be part of the block "U_VOLTAGE_PROTECTION" shown in Fig. 2. The overvoltage protection circuit 32 may correspond to the first overvoltage protection circuit 10. The overvoltage protection circuit 34 may correspond to the second overvoltage protection circuit 16. The overvoltage protection circuit 32 comprises an N-type MOSFET V600 that may correspond to the first transistor 25. The overvoltage protection circuit 34 comprises an N-type MOSFET V601 that may correspond to the second transistor 26. The overvoltage protection circuit 32 comprises an OSPC U600 that may correspond to the OSPC 27. The overvoltage protection circuit 34 comprises an OSPC U601 that may correspond to the OSPC 28. The capacitors C602 and C603 may be omitted.

The OSPC U600 has a terminal designated "GATE" that is directly connected to the gate of the transistor V600. The first overvoltage protection circuit 32 further comprises a Z-diode V602 electrically coupled to the gate of the transistor V600 and the first output connected to the terminal designated "VOUT". This configuration may ensure that the transistor V600 is not destroyed by high voltages provided by the terminal "GATE". The first overvoltage protection circuit 32 further comprises a capacitor C600 in parallel to the Z-diode V602.

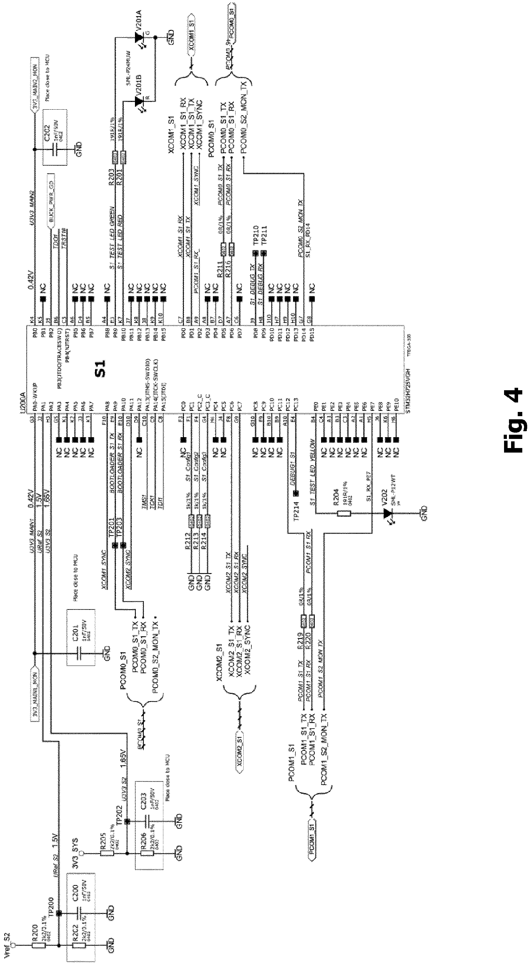

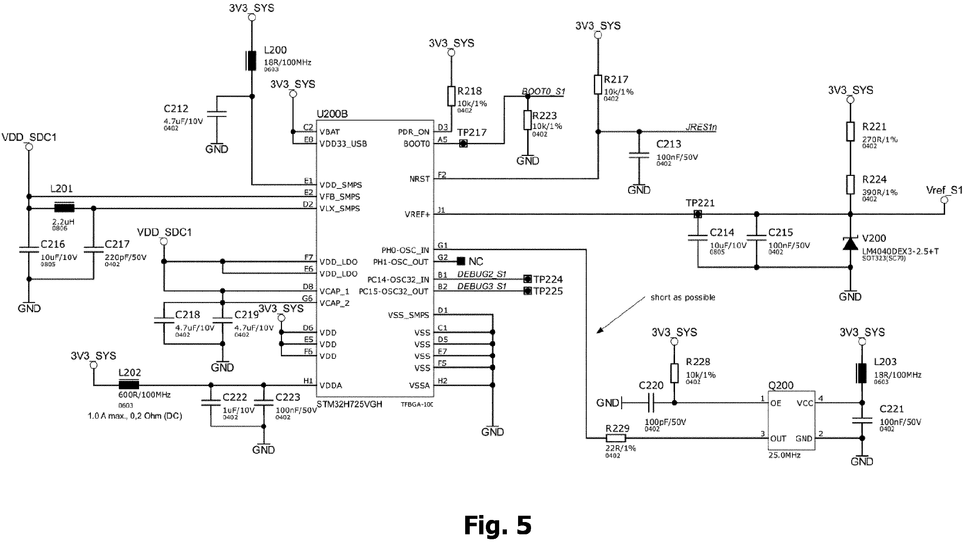

Fig. 4 shows a circuit diagram of a first portion U200A of a microcontroller U200 in accordance with the present disclosure. Fig. 5 shows a circuit diagram of a second portion U200B of the microcontroller U200 in accordance with the present disclosure. The "Safety Core 1" may comprise the microcontroller U200 and the additional components (e.g., resistors, capacitors, coils and diodes) shown in the circuit diagrams of Fig. 4 and Fig. 5. The microcontroller U200 may correspond to the at least one microcontroller described herein, for example to the microcontroller 4. The "Safety Core 2" may comprise a microcontroller U300 configured similarly as the microcontroller 200. The microcontroller U300 may correspond to the microcontroller 6. The microcontroller U300 may be connected in parallel with the microcontroller U200 as indicated in Fig. 2.

As shown in Fig. 4, the microcontroller U200 is provided with the voltage 3V3_MAIN1_MON at the pin PA0-WKUP, with the voltage 3V3_MAIN2_MON at the pin PB0 and with a voltage derived from the voltage 3V3_SYS at pin PA2. The microcontroller U200 is configured to convert these voltages into digital values. For this analog-to-digital conversion, the microcontroller U200 uses the voltage VREF+ generated based on the supply voltage 3V3_SYS (see Fig. 5) as a maximum value, and 0 V as a minimum value. The microcontroller U200 may have a resolution of up to 16 bit. The microcontroller may use a lower resolution for the analog-to-digital conversion. As an example, if VREF+ corresponds to 2.5 V and the digitized voltages are to be represented using 12 bits, the analog-to-digital conversion may have a resolution of VREF+ / number of bits = 2.5 V / 2^12 = 610 µV.

The microcontroller U200 is provided with a monitoring voltage derived from Vref_S2 generated by the microcontroller U300 of the "Safety Core 2". Similarly, the voltage Vref_S1 generated as shown in Fig. 5 is provided to the "Safety Core 2". This may enable determining, by the microcontroller U200, whether the microcontroller U300 of the "Safety Core 2" is operating at a different supply voltage, and vice versa.

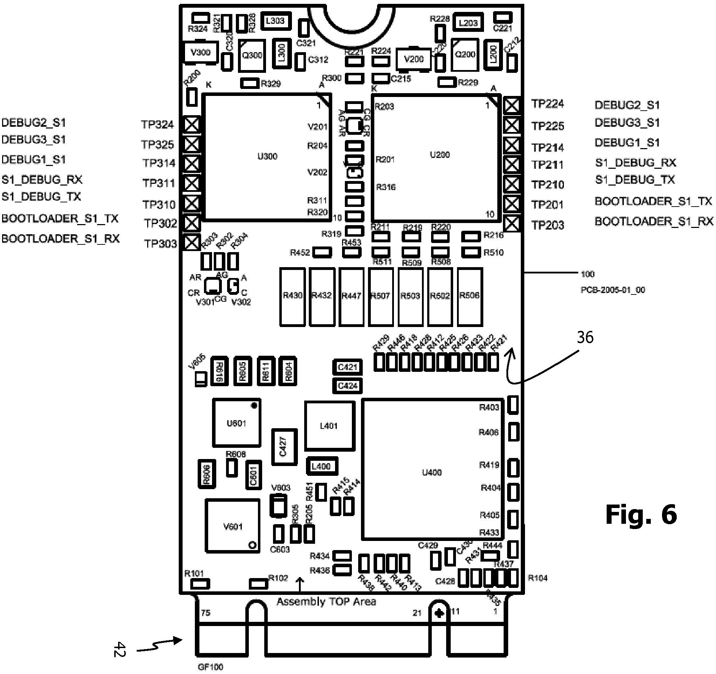

Fig. 6 shows a schematic illustration of an upper surface 36 of a card in accordance with the present disclosure. The card may correspond to the card 100 described herein. Generally speaking, one of the overvoltage protection circuits 10, 16, 32, 34 and the at least one microprocessor 2, 4, U200, U300 may be arranged on a same side of the card 100, whereas the other one of the overvoltage protection circuits 10, 16, 32, 34 may be arranged on an opposite side of the card 100. One of the overvoltage protection circuits 10, 16, 32, 34 may be mounted on a same surface of a circuit board (e.g., the circuit board 2) of the card 100 as the at least one microprocessor 2, 4, U200, U300, whereas the other one of the overvoltage protection circuits 10, 16, 32, 34 may be arranged on an opposite surface of the circuit board (e.g., the circuit board 2) of the card 100. In the example of Fig. 6, the two microprocessors U200 and U300 are arranged on (e.g., mounted on) the upper surface 36. The transistor U601 and the OSPC V601 are also arranged on the upper surface 36. The PCIe bridge U400 (e.g., corresponding to the PCIe bridge 30) may also be arranged on the upper surface 36. A highest point of the card may lie 1.5mm or less, or even 1.35mm or less, above (in Fig. 6 toward the viewer) the upper surface 36. It may be advantageous to arrange the microprocessors U200 and U300 and the PCIe bridge U400 on the same surface 36 of the circuit board of the card 100. These components may generate large amounts of heat. Arranging these components on the same side of the card 100 allows for a heat transfer from the same side of the card 100. The same side of the card 100 may be cooled, for example using a passive or active cooling element coupled to or arranged next to the card 100. Such a cooling element may be attached onto the microprocessors U200, U300 and the PCIe bridge U400 (e.g., after mounting the card 100 in a computing system). This may allow a safe operation of the card 100 at temperatures up to 85°C.

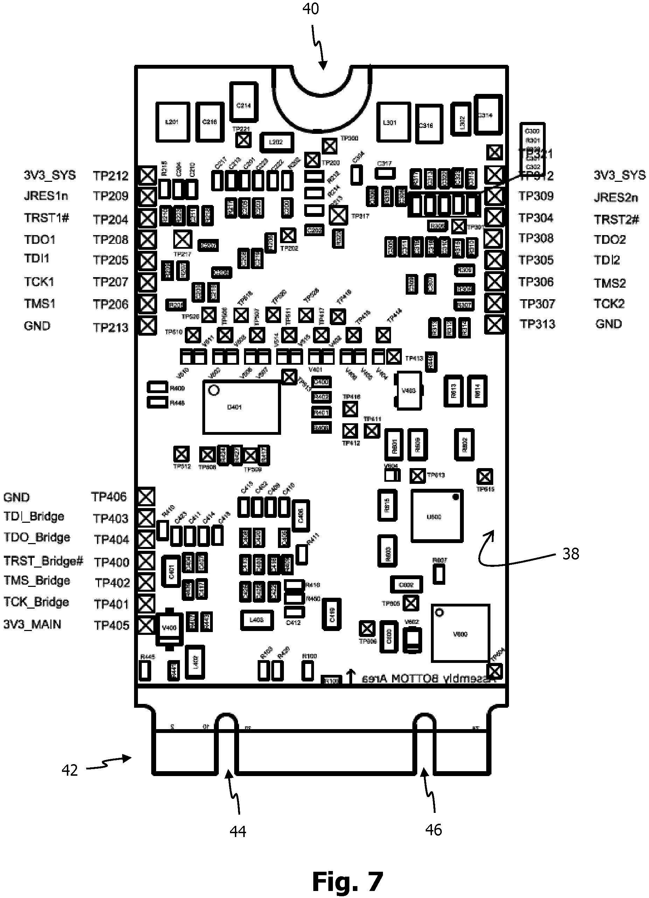

Fig. 7 shows a schematic illustration of a lower surface 38 of a card in accordance with the present disclosure. The card of Fig. 7 may correspond to the card shown in Fig. 6. The card of Fig. 7 may correspond to the card 100 described herein. As can be seen, only one of the overvoltage protection circuits 10, 16, 32, 34 may be provided on the lower surface 38. In the given example, the transistor U600 and the OSPC V600 are arranged on the lower surface 38. A lowest point of the card may lie 1.5 mm or less, or even 1.35 mm or less, below (in Fig. 7 toward the viewer) the lower surface 38.

The circuit board of the card of Fig. 6 and Fig. 7 (e.g., the circuit board 2) may comprise a recess 40 on an edge opposite to an edge connector 42. The edge connector 42 may correspond to the edge connector 22. The recess 40 may be configured for fixing the card to a receptacle (e.g., a slot of another circuit board), for example using a screw. The recess 40 may be a semicircular mounting hole. The edge connector 42 may have 75 positions with up to 67 pins or fingers, employing a 0.5 mm pitch. The pins or fingers on opposing sides of the circuit board 2 may be offset from each other. The edge connector 42 may be a "B and M key" edge connector (e.g., according to the M.2 specification). The edge connector 42 may comprise two recesses 44, 46 defining the edge connector 42 as the "B and M key" edge connector.

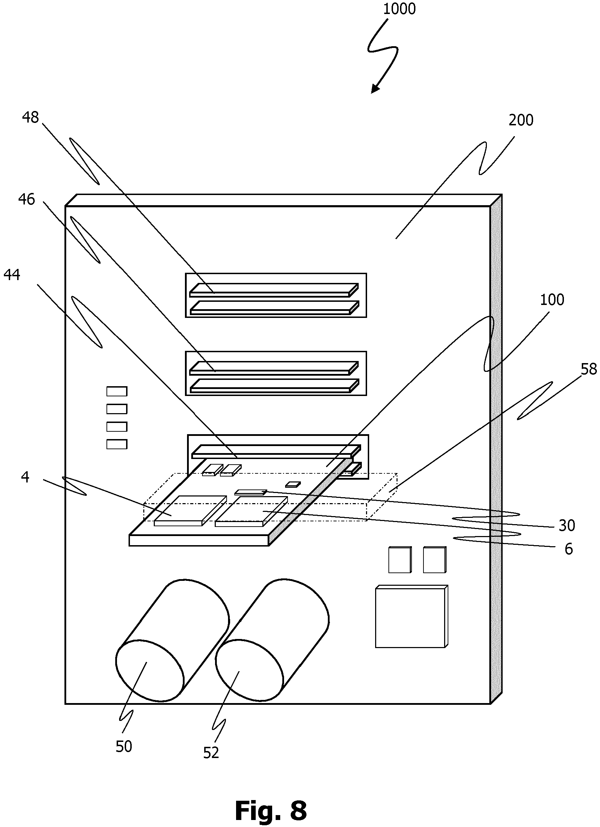

Fig. 8 shows a schematic illustration of a system 1000 in accordance with the present disclosure. The system 1000 comprises the card 100 and a circuit board 200. The circuit board comprises at least one socket 48, 50, 52. The at least one socket 48, 50, 52 is configured to couple to the card 100. In the example shown in Fig. 8, the card 100 is mounted to the circuit board 200 by being inserted the socket 48. The at least one socket 48, 50, 52 may comprise one or more electric contacts configured to electrically contact the pins or fingers 24 of the card 100.

In the example shown in Fig. 8, the card 100 extends orthogonal to the circuit board 200. It is noted that it may also be possible to provide a socket that allows mounting the card 100 to the circuit board 200 such that it extends skewed or parallel to the circuit board 200. This may result in an even more compact arrangement.

The circuit board 200 may comprise the power controller and/or the power converter described herein, for example as the only power converter of the system 1000. The power converter may comprise one or more inductors or buffer capacitors 54, 56. These components 54, 56 may be too large to be mounted on the card 100 without contradicting the M.2 specification. The circuit board 200 may or may not comprise an overvoltage protection circuit configured to protect the card supply voltage from exceeding a predefined threshold. The system 1000 may further comprise the active or passive cooling element 58. The cooling element 58 may be configured to actively or passively cool the at least one microcontroller 4, 6 and, optionally, the PCIe bridge 30.

The card described herein may enable a safe operation of the at least one processor even if coupled to a circuit board providing a card supply voltage not protected against overvoltages. The card may be small, easy to manufacture and low in cost. Further technical effects and advantages are described above. Additional technical effects and advantages will be apparent for those skilled in the art.

Numerous modifications of the cards and system described herein may be possible. For example, the card may comprise an additional (e.g., third) overvoltage protection circuit in series with the first and the second overvoltage protection circuits. The card may comprise a second instance of the first and second overvoltage protection circuits that is arranged in parallel with the first and second overvoltage protection circuits. This may improve reliability in case of a failure of one of the first or the second transistor. It is to be understood that some of the features described herein may not be implemented in the card or system.

In one particular example, the card is an expansion card that may or may not comply with the M.2 specification. In other words, the present disclosure may not be limited to M.2 expansion cards (e.g., it may equally apply to other types of expansion cards such as, for example, a card according to the mSATA standard or a card complying with a future specification following the current M.2 specification).

In another example, an (e.g., M.2) expansion card (e.g., the card 100) may be provided, comprising at least one microcontroller (e.g., one or more of the microcontrollers 2, 4, U200, U300), a first overvoltage protection circuit (e.g., the circuit 10 or 32) and a second overvoltage protection circuit (e.g., the circuit 16 or 34), wherein the first overvoltage protection circuit is coupled in series with the second overvoltage protection circuit, wherein the card is configured such that the at least one microcontroller is provided with a voltage output of the second overvoltage protection circuit as the microcontroller's supply voltage. In this example, the at least one microcontroller may be coupled in series with both the first and the second overvoltage protection circuit. The expansion card of this example may comprise one or more features of the card 100 described above and/or one or more of the features of the card according to the first aspect.

## Claims

1. An M.2 expansion card (100), comprising:
at least one microcontroller (4, 6; U200, U300); and
a first overvoltage protection circuit (10; 32) having a first input (12) and a first output (14) and configured to provide a first output voltage at the first output (14) based on a first voltage at the first input (12) such that the first output voltage is below a first predefined voltage threshold; and
a second overvoltage protection circuit (16; 34) having a second input (18) and a second output (20), wherein the second input (18) is electrically connected to the first output (14), wherein the second overvoltage protection circuit (16; 34) is configured to provide a second output voltage at the second output (20) based on the first output voltage at the second input (18) such that the second output voltage is below a second predefined voltage threshold,
wherein the second output (20) is electrically connected to the at least one microcontroller (4, 6; U200; U300) to provide the at least one microcontroller (2, 4; U200, U300) with a supply voltage.

2. The card (100) of claim 1, wherein the first overvoltage protection circuit (16; 32) comprises a first transistor (25; V600) having a first gate (G1), wherein the first overvoltage protection circuit (16; 32) further comprises a first overvoltage supply protection controller, OSPC, (27; U600) configured to turn off the first gate (G1) of the first transistor (25; V600) if the first voltage reaches or exceeds the first predefined voltage threshold.

3. The card (100) of claim 2, wherein the first transistor (25; V600) comprises a drain electrode (D1) and a source electrode (S1), wherein the drain electrode (D1) is directly connected to the first input (12) or corresponds to the first input (12), wherein the source electrode (S1) is directly connected to the first output (14) or corresponds to the first output (14).

4. The card (100) of any one of claims 1 to 3, wherein the first predefined voltage threshold corresponds to the second predefined voltage threshold.

5. The card (100) of any one of claims 1 to 4, wherein the first overvoltage protection circuit (10; 32) is structurally identical to the second overvoltage protection circuit (16; 34) and/or wherein the first overvoltage protection circuit (10; 32) and the second overvoltage protection circuit (16; 34) consist of similar electric components.

6. The card (100) of any one of claims 1 to 5, further comprising an edge connector (22; 42) having a plurality of fingers (24), wherein the first input (12) is directly connected to one or more of the plurality of fingers (24).

7. The card (100) of any one of claims 1 to 6, wherein the card (100) comprises no components having a thickness of more than 1.5 mm.

8. The card (100) of any one of claims 1 to 7, wherein a capacitor (C214; C216) arranged on the card (100) and having, among all capacitors (C600; C601; C602; C603; C201-C203; C212-C223) arranged on the card (100), a largest capacitance, has a capacitance equal to or below 100 µF.

9. The card (100) of any one of claims 1 to 8, configured such that the at least one microcontroller (4, 6; U200, U300) is provided with at least one monitoring voltage chosen from (i) a first monitoring voltage representative of the first voltage and (ii) a second monitoring voltage representative of the first output voltage, in addition to the supply voltage.

10. The card (100) of claim 9, wherein the at least one microcontroller (2, 4; U200, U300) is configured to digitize the at least one monitoring voltage.

11. The card (100) of any one of claims 1 to 10, wherein the at least one microcontroller (4, 6; U200, U300) is configured to digitize the supply voltage.

12. The card (100) of any one of claims 1 to 11, configured such that the at least one microcontroller (4, 6; U200, U300) is the only active electric component of the card (100) that uses the second output voltage or a voltage derived from the second output voltage as its supply voltage.

13. The card (100) of any one of claims 1 to 12, further comprising a Peripheral Component Interconnect Express, PCIe, bridge (30; U400) arranged to receive the first voltage as its supply voltage.

14. The card (100) of any one of claims 1 to 13, fulfilling at least one of the following properties:
(a) the card (100) has a width (W) equal to or below 22 mm;
(b) the card (100) has a length (L) equal to or below 42 mm;
(c) a highest point of the card lies 1.5 mm or less, for example 1.35 mm or less, above a surface (36; 38) of a circuit board (2) of the card (100).

15. A system (1000) comprising:
the card (100) according to any one claims 1 to 14; and
a circuit board (200) having a socket (48; 50; 52) configured to couple to the card (100).
